# EUROPÄISCHE PATENTSCHRIFT

(11) **EP 1 420 544 B1**
(45) Veröffentlichungstag und Bekanntmachung des Hinweises auf die Patenterteilung: **05.01.2011**
(21) Anmeldenummer: 02025495.9
(22) Anmeldetag: 15.11.2002
(51) Int. Cl.: H04W 24/08, H04L 12/26

(54) **Verfahren zur Konfiguration einer Messaufgabe auf einem Protokolltester und Protokolltester**
Method for test configuration of a protocol tester and protocol tester therefor
Méthode pour configurer un test dans un testeur de protocole et testeur de protocole correspondant

(43) Veröffentlichungstag der Anmeldung: 19.05.2004
(73) Patentinhaber: Tektronix International Sales GmbH, 8212 Neuhausen (CH)
(72) Erfinder: Schönfeld, Christian, 12207 Berlin (DE); Wagner, Ute, 14641 Falkenrehde (DE); Wiedemann, Mike, 13629 Berlin (DE); Zander, Christian, 13589 Berlin (DE)
(74) Vertreter: Schurack, Eduard F.

(56) Entgegenhaltungen:
- EP-A- 1 128 600
- US-A- 6 098 028
- "K1297/K1205 Series Protocol Tester" TEKTRONIX, 20. September 2002 (2002-09-20), XP002225050 Gefunden im Internet: <URL:www.tektronix.com/mobile> [gefunden am 2002-12-16]

## Beschreibung

Die vorliegende Erfindung betrifft ein Verfahren zur Konfiguration einer Messaufgabe auf einem Protokolltester sowie einen entsprechenden Protokolltester.

Die Konfiguration von Messaufgaben im Umfeld der Telekommunikationstechnik erfordert eine Vielzahl von Informationen, welche komplex sind und sich oft nur schwer zusammenfassen bzw. einstellen lassen. Besonders nachteilig wirkt sich dies dann aus, wenn der Anwender nicht sehr vertraut ist mit den Details und den Abhängigkeiten der Konfigurationsparameter innerhalb des vielschichtigen Messsystems. Im Stand der Technik werden die zur Konfiguration einer Messaufgabe nötigen Informationen in einer für den Anwender häufig unerklärlichen Reihenfolge nacheinander abgefragt. Sind die darüber gemachten Angaben widersprüchlich, fehlerhaft oder unvollständig, werden Fehlermeldungen angezeigt. Beispiel einer Messaufgabe: Zum Monitoren eines Interfaces eines GPRS-Netzwerks muss ein Anwender das in seinem Protokolltester vorhandene physikalische Interface geeignet konfigurieren. Hierfür sind Eingaben nötig über die Datenübertragungsrate, den Abschlusswiderstand, die Taktrate, das Framing sowie die Art der Kodierung der Bits usw.. Der auf einem Interface, z. B. einem Gr-Interface, verwendete Protokollstack muss vom Kunden konfiguriert werden bis auf die Ebene, auf der er monitoren möchte. Dazu muss er aus einer unsortierten Menge von ca. 200 bis 400 Protokollstacks den geeigneten auswählen.

Hierfür ist eine detaillierte Kenntnis des Umfelds der Messaufgabe nötig. Die Wahrscheinlichkeit von falschen Eingaben und falschen Konfigurationen ist sehr hoch.

Im Stand der Technik wird demnach von "unten nach oben" konfiguriert durch Eingabe von Details auf der untersten Ebene. Durch die Spezifizierung der physikalischen Eigenschaften ergeben sich dann die Netzwerktopologieelemente oder Interfaces auf der obersten Ebene. Zur Spezifizierung eines RNCs (RNC = radio network controller) in einem UMTS-Netzwerk müssen beispielsweise ca. 10 Parameter eingegeben werden. Aus den 10 eingegebenen Parametern ist dann in der obersten Ebene klar, dass ein RNC definiert werden sollte. Dies ist umständlich, zeitintensiv und fehleranfällig.

Aus der EP 1 128 600 A1 ist ein Verfahren zum Erstellen eines Ablaufs einer zwischen mindestens zwei Instanzen ablaufenden Kommunikation bekannt, wobei eine Instanz ein Protokolltester ist. Am Protokolltester sind graphisch mehrere Auswahlschritte möglich. So könnten die an der Kommunikation beteiligten Instanzen, eine Protokollschicht, auf deren Grundlage die Kommunikation zwischen den ausgewählten Instanzen ablaufen soll, diejenigen abstrakten Kommunikationsschnittstellen der Protokollschicht, die an der Kommunikation beteiligt sind und Kommunikationsdaten ausgewählt werden.

Der vorliegenden Erfindung liegt deshalb die Aufgabe zugrunde, einen Anwender bei der Konfiguration von Messaufgaben im Umfeld der Telekommunikationstechnik zu unterstützen, insbesondere die Anzahl fehlerhafter Eingaben zu minimieren.

Diese Aufgabe wird gelöst durch ein Verfahren mit den Merkmalen von Patentanspruch 1 und einem Protokolltester mit den Merkmalen von Patentanspruch 11.

Der vorliegenden Erfindung liegt die Erkenntnis zugrunde, dass diese Aufgabe gelöst wird, indem die Konfiguration der Messaufgabe von "oben nach unten" vorgenommen wird. Dazu steigt der Benutzer nicht auf der Detailebene ein, sondern bei seinem Problemfeld, d. h. der Ebene des Telekommunikationsnetzplans. Damit der Benutzer nicht für jede Trivialität in der Detailebene Einstellungen vornehmen muss, werden diese mit Standardwerten belegt. Hier fließt das verfügbare Expertenwissen ein und unterstützt den Benutzer bei der Konfiguration seiner Messaufgabe. Selbstverständlich können, sofern gewünscht, diese Standardwerte auf der entsprechenden Eingabeebene vom Benutzer modifiziert werden. Der Anwender findet sich demnach auf der Ebene wieder, die seine Probleme und Aufgaben erkennen lässt. Dazu wird dem Anwender sein Problemfeld visuell präsentiert, wobei in dem Telekommunikationsnetzplan das Expertenwissen integriert ist. Wird aus dem Problemfeld eine Messaufgabe gewählt, stehen dadurch sofort zusätzliche Informationen für weitere Konfigurationsschritte zur Verfügung. Diese Informationen muss daher der Anwender nicht kennen, da diese dadurch gewonnen werden, dass das Expertenwissen mit den aktuellen Systemparametern in Beziehung gesetzt wird. Die Informationsflut für den Anwender wird dadurch minimiert, d. h. er wird in der Konfiguration seiner Messaufgabe "geleitet".

Mit dem Begriff Netzwerktopologieelemente werden in der vorliegenden Anmeldung sowohl Netzwerkelemente als auch Schnittstellen bezeichnet.

Die vorliegende Erfindung kann gut in Zusammenhang mit der parallelen Patentanmeldung mit demselben Anmeldetag mit dem Titel "Verfahren zur Anpassung einer Benutzeroberfläche auf einer Anzeigevorrichtung eines Protokolltesters und Protokolltester zur Durchführung des Verfahrens" angewendet werden, die als EP 1 420 543 A1 veröffentlicht ist.

Der Anwender, der prinzipiell nur das Problem kennt, das er lösen möchte, wird daher von einem erfindungsgemäßen Protokolltester zunächst bei seiner Problemfindung unterstützt. Dazu wird ihm sein Problemfeld als visueller Netzplan dargelegt und in diesem Kontext wird ihm durch Unterstützung durch den erfindungsgemäßen Protokolltester ermöglicht, seine eigentliche Messaufgabe zu konfigurieren. Fehleingaben und unnötige Eingaben, die für diese Messaufgabe nicht sinnvoll sind, entfallen dadurch.

Bei den Standardwerten handelt es sich um sinnvolle Default-Werte, die einen möglichst hohen Prozentsatz üblicher Konfigurationen abdecken, beispielsweise zwischen 60 und 80 Prozent.

Bevorzugt umfassen die Messaufgaben, aus denen der Benutzer auswählen kann, die folgenden: Monitoring, Calltracing, Simulation, Emulation, statistische Auswertung von Signalisierungsflüssen, Recording, d. h. Aufzeichnen von Daten, Conformancetest, Regressionstest, Lasttest und Fehlertoleranztest.

Wählt der Benutzer beispielsweise die Messaufgabe Monitoring, so kann er in der nächsten Ebene spezifizieren, auf welchen Schnittstellen er monitoren möchte. In der darauffolgenden Ebene kann der Benutzer dann spezifizieren, welche Protokolle er monitoren möchte.

Um dem Benutzer die Konfiguration der Messaufgabe weiter zu erleichtern, kann vorgesehen sein, dass die Elemente, beispielsweise die Messaufgabe, die Schnittstellen, die Protokolle, die zur Konfiguration der Messaufgabe durch den Benutzer in Frage kommen, auf der Anzeigevorrichtung optisch anders dargestellt werden, insbesondere durch eine andere Farbe, als Elemente die er noch erwerben kann, oder Elemente die gegenwärtig nicht angeboten werden, oder Elemente, die er online erwerben kann. Dadurch wird sichergestellt, dass der Benutzer nur solche Messaufgaben konfiguriert, die er mit seinem Protokolltester tatsächlich durchführen kann. Fehlkonfigurationen werden dadurch zuverlässig unterbunden.

Bei der Konfiguration der Messaufgabe kann mindestens ein Protokoll angegeben werden, das zur Lösung der Messaufgabe beiträgt, wobei die Konfiguration über graphisches Auswählen, insbesondere mittels Checkbox, Combobox und Pop-Up-Menü erfolgt. Unterschiedliche Versionen des mindestens einen Protokolls kann der Benutzer bevorzugt ebenfalls selektieren, insbesondere wiederum mittels Checkbox, Combobox oder Pop-Up-Menü.

Nach Konfiguration der Messaufgabe durch den Benutzer ist es bevorzugt, dass sich der Protokolltester hardwaremäßig im Hinblick auf die konfigurierte Messaufgabe konfiguriert. Hierbei werden entsprechende Abschlusswiderstände, Taktraten, Datenübertragungsraten, Framing usw. eingestellt.

Die Standardwerte werden bevorzugt herstellerseitig ermittelt und im Protokolltester vorgegeben. Es kann vorgesehen sein, dass diese vom Benutzer modifiziert werden können.

Um die Konfiguration einer Messaufgabe noch weiter zu erleichtern, kann vorgesehen sein, dass dem Benutzer bei der Auswahl der Messaufgabe auch bereits in der Vergangenheit konfigurierte Messaufgaben auf der Anzeigevorrichtung zur Auswahl und/oder zur Modifikation angegeben werden. Wenn beispielsweise nur wenige Parameter gegenüber einer bereits konfigurierten Messaufgabe zu ändern sind, lässt sich dadurch enorm Zeit sparen.

Die oben anhand des erfindungsgemäßen Verfahrens beschriebenen Merkmale sind selbstverständlich auch bei dem erfindungsgemäßen Protokolltester realisierbar, so dass sich auch dort die entsprechenden Vorteile erzielen lassen.

Weitere vorteilhafte Ausführungsformen ergeben sich aus den Unteransprüchen.

Im Nachfolgenden wird nunmehr ein Ausführungsbeispiel der Erfindung unter Bezugnahme auf die beigefügten Zeichnungen näher beschrieben. Es stellen dar:
- Figur 1: einen visuellen Netzplan für ein UMTS-Telekommunikationsnetz mit di- versen Netzwerkelemente und Schnittstellen;
- Figur 2: den Netzplan von Figur 1 nach dem Anklicken der Netzwerkelement "RNC";
- Figur 3: den Netzplan von Figur 2 nach dem Anwählen der Messaufgabe "Moni- tor";
- Figur 4: den Netzplan von Figur 3 nach der Angabe, welche Schnittstellen des "RNCs" gemonitort werden sollen;
- Figur 5: den visuellen Netzplan von Figur 4 nach der Spezifikation der zu monitor- enden Schnittstellen; und
- Figur 6: eine Eingabemaske, die die bisherige Konfiguration der Messaufgabe zu- sammenfasst und zur Spezifizierung der zu monitorenden Protokolle auf- fordert.

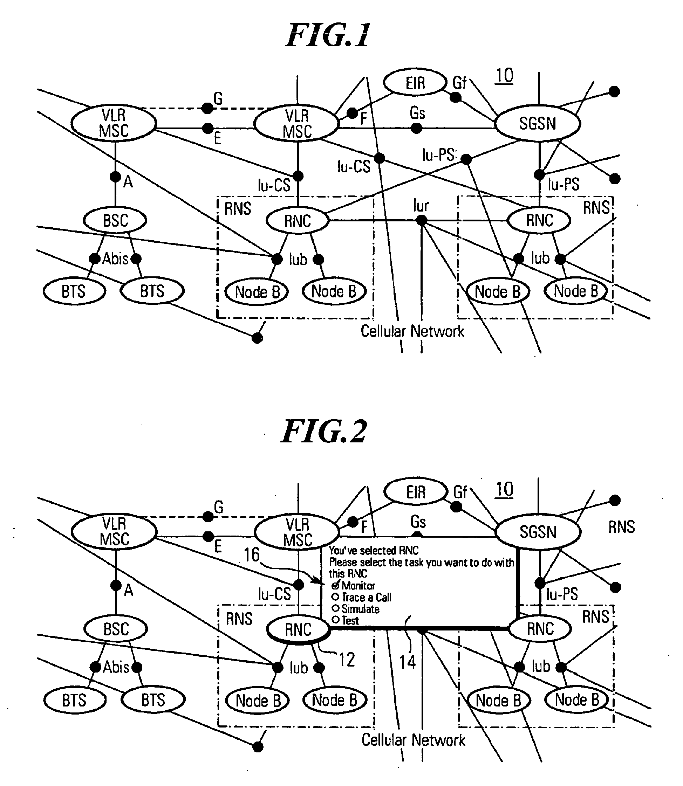

Figur 1 zeigt einen visuellen Netzplan 10 eines UMTS-Netzwerks mit Netzwerktopologieelementen und Schnittstellen wie sie einem Fachmann geläufig sind. Die Netzwerkelemente sind durch Ellipsen gekennzeichnet, beispielsweise BTS (Base Transceiver Netzwerkelement), BSC (Base Netzwerkelement Controller), MSC (Mobile Switching Center), SGSN (Serving GPRS Support Node), Node B (Knoten B), VLR (visitor location register), RNC und EIR (equipment identity register). Die Schnittstellen, die sogenannten "Interfaces", sind gekennzeichnet durch gefüllte kreisförmige Flächen, die zwischen den Netzwerkelemente angebracht sind, beispielsweise A, Abis, E, G, F, Gf, Gs, lu-CS, lu-PS, lur, lub. Der auf der Anzeigevorrichtung dargestellte visuelle Netzplan stellt einen Ausschnitt aus einem größeren Basisnetzplan dar. Sofern die Elemente und Schnittstellen nicht angezeigt werden, für die der Benutzer eine Messaufgabe konfigurieren möchte, kann er den Ausschnitt verschieben, beispielsweise zum Monitoren einer Gn-Schnittstelle zwischen dem dargestellten SGSN und dem GGSN (Gateway GPRS Supporting Note).

In Figur 1 kann nun ein Benutzer ein Netzwerkelement spezifizieren, an dem er seine Messaufgabe konfigurieren möchte. Vorliegend hat ein Benutzer das RNC-Element 12 angewählt und kann nunmehr über das Eingabefenster 14 von Figur 2 angeben, welche Aufgabe er ausführen möchte. Vorliegend wird angeboten, den RNC 12 zu monitoren, eine Rufverfolgung (Trace a Call) durchzuführen oder eine Simulation oder einen Test. Wie durch ein Häkchen in der Checkbox 16 angedeutet, hat sich der Benutzer vorliegend dafür entschieden, den RNC 12 zu monitoren.

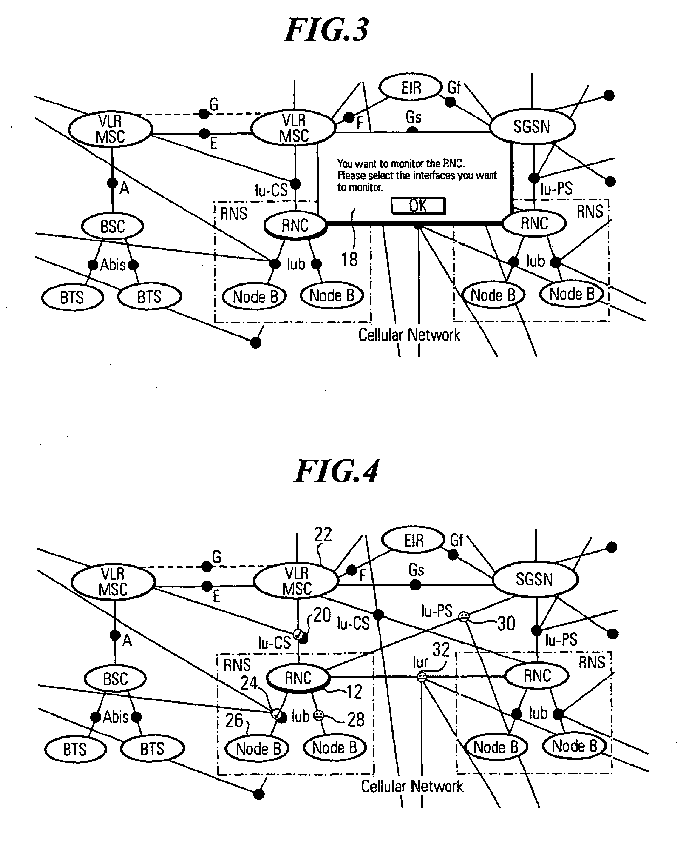

Figur 3 zeigt den visuellen Netzplan von Figur 2, allerdings jetzt mit einem Eingabefenster 18, in dem der Benutzer aufgefordert wird, die Schnittstellen zu spezifizieren, die er monitoren möchte. Durch Anklicken ergibt sich die Darstellung von Figur 4, in der der Benutzer spezifiziert hat, dass er die lu-CS-Schnittstelle 20 zwischen dem Netzwerkelement VLR MSC 22 und dem RNC 12, die Schnittstelle lub 24 zwischen dem RNC 12 und dem Node B 26 monitoren möchte. Die Schnittstellen 28, 30 und 32, die der Benutzer nicht aktiviert hat, sind entsprechend gekennzeichnet.

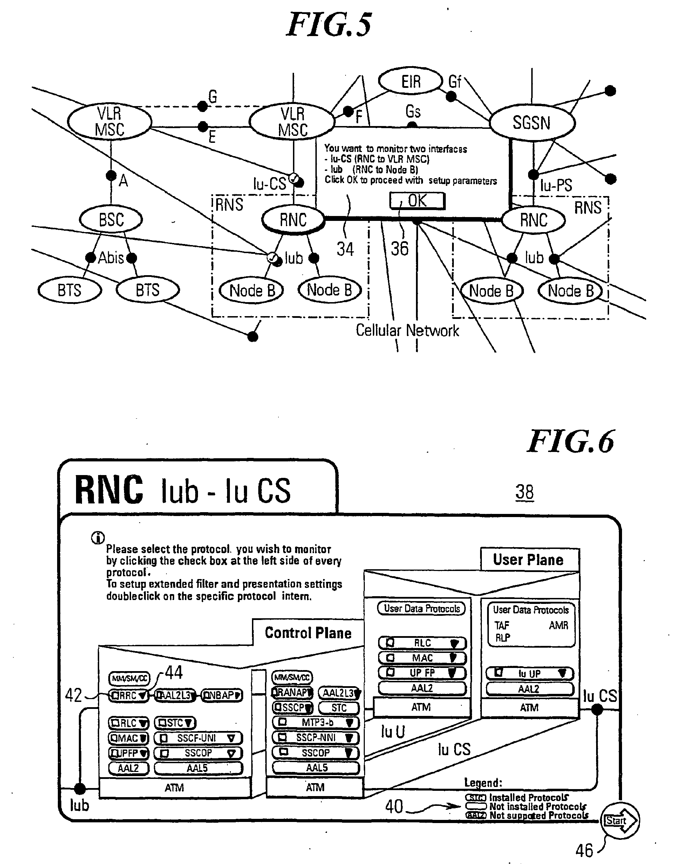

Figur 5 zeigt in einem Eingabefenster 34 eine Zusammenfassung der bisherigen Konfiguration der Messaufgabe: Demnach will der Benutzer monitoren und zwar zwei Schnittstellen, nämlich die lu-CS zwischen dem RNC und dem VLR MSC sowie die Schnittstelle lub zwischen dem RNC und dem Node B. Durch Anklicken der Schaltfläche 36 bestätigt der Benutzer diese Konfiguration und erhält als nächstes die in Figur 6 dargestellte Bildschirmoberfläche 38 präsentiert. Mittels dieser Benutzeroberfläche 38 kann der Benutzer spezifizieren, welche Protokolle gemonitort werden sollen. In der Legende 40 wird darauf hingewiesen, dass die unterschiedliche graphische Präsentation mit unterschiedlichen Bedeutungen verknüpft ist: so handelt es sich bei den dunkel dargestellten Protokollen um installierte Protokolle, bei den hell dargestellten Protokollen um nicht instaiiierte Protokolle, die jedoch noch erworben werden können, und bei den mittelgrau dargestellten Protokollen um nicht unterstützte Protokolle, d. h. Protokolle die nicht erworben werden können. Links von jedem Protokoll ist eine Checkbox (viereckig), beispielsweise die Checkbox 42 angegeben, die von einem Benutzer angeklickt werden kann, um anzuzeigen, dass er dieses Protokoll zu monitoren wünscht. Mit dem nach unten gerichteten Dreieck 44 bei den diversen Protokollen können verschiedene Protokollvarianten ausgewählt werden. Durch Doppelklicken auf das jeweilige Protokoll können Filterfunktionen und Darstellungseinstellungen eingegeben werden. Über die Steuerungsebene (control plane) werden nur netzwerkinterne Nachrichten ausgetauscht, während über die Benutzerebene (user plane) die eigentlichen Nutzdaten, wie z.B. Sprachdaten, Email, etc., übertragen werden. Der RNC ist zwischen den beiden Stacks angeordnet und überträgt vom jeweils linken Stack zum jeweils rechten Stack und umgekehrt. Durch Anklicken des Start-Icons 46 wird der Protokolltester automatisch auf die durch den Anwender spezifizierte Messaufgabe konfiguriert und wechselt in den Monitormodus.

Andere Messaufgaben, die sich gut mit dem erfindungsmäßen Verfahren und dem erfindungsgemäßen Protokolltester lösen lassen, sind zum Beispiel die folgenden:
Recording: Nach dem Wählen der Messaufgabe "Recording" wird der Benutzer unterstützt bei der Konfiguration der Aufzeichnungsdatei, zum Beispiel hinsichtlich Name, Modus, Größe, Dauer. Sonstige Konfigurationen, beispielsweise eine Konfiguration der Hardware, können wie beim oben beschriebenen Monitoring vorgenommen werden. Dies ist jedoch optional, da ansonsten die Default-Einstellungen verwendet werden.
Calltrace: Nach dem Wählen der Messaufgabe "Calltrace" wird der Benutzer aufgefordert, die zu suchenden Rufnummern und den Nummerntyp(zum Beispiel IMSI = International Mobile Subscriber Identity, Called Party Number, IP address) einzugeben. Sonstige Konfigurationsmöglichkeiten wie oben beim Recording beschrieben.
Lasttest: Nach dem Wählen der Messaufgabe "Test" an einem Netzwerkelement wird der Benutzer aufgefordert, die Schnittstellen anzugeben, die unter Last getestet werden sollen. Anschließend kann der Benutzer die zu testende Last in Prozent oder in anderen sinnvollen Einheiten (zum Beispiel Anzahl Nachrichten, Rufaufbauten oder Transfers pro Zeiteinheit) spezifizieren. Dann kann ein Testszenario gewählt werden, zum Beispiel durch eine Ablaufbeschreibung des Tests, insbesondere durch die Spezifizierung der Reihenfolge der Nachrichten. Optional kann ein Szenario von Hand im Detail konfiguriert werden. Sonstige Konfigurationsmöglichkeiten wie oben beim Recording beschrieben.

## Patentansprüche

1. Verfahren zur Konfiguration einer Meßaufgabe auf einem Protokolltester, folgende Schritte umfassend:
a) Anzeigen eines visuellen Netzplans (10) auf einer Anzeigevorrichtung, wobei der visuelle Netzplan (10) mehrere Netzwerktopologieelemente (12, 20, 22, 24, 26, 28, 30, 32) als Ebene eines Telekommunikationsnetzwerks darstellt
b) Graphisches Aktivieren mindestens eines der dargestellten Netzwerkelementen (12) durch einen Benutzer;
c) Anzeigen verschiedener Meßaufgaben (16) auf der Anzeigevorrichtung, die mit Bezug auf das mindestens eine aktivierte Netzwerkelement möglich sind;
d) Graphisches Auswählen einer der Meßaufgaben (16) durch den Benutzer, wobei zur weiteren Konfiguration der Meßaufgabe der Benutzer, ausgehend von der Ebene des aktiviertes Netzwerkelements, Ebene für Ebene in darunter liegenden Ebenen weitere, der Meßaufgabe zur konfiguration dienende Parameter eingeben kann, wobei die nicht vom Benutzer spezifizierten Parameter mit Standardwerten belegt werden.

2. Verfahren nach Anspruch 1,
**dadurch gekennzeichnet,**
**daß** die Meßaufgaben, aus denen der Benutzer auswählen kann, folgende umfassen: Monitoring (16), Calltracing, Simulation, Emulation, Statistische Auswertung von Signalisierungsflüssen, Recording, Conformance Test, Regressionstest, Lasttest und Fehlertoleranztest.

3. Verfahren nach Anspruch 2,
**dadurch gekennzeichnet,**
**daß** der Benutzer bei Auswahl des Monitorings (16) als Meßaufgabe in der nächsten Ebene spezifizieren kann, auf welchen Schnittstellen (20, 24, 28, 30, 32) er monitoren möchte.

4. Verfahren nach Anspruch 3,
**dadurch gekennzeichnet,**
**daß** der Benutzer in der nächsten Ebene spezifizieren kann, welche Protokolle er monitoren möchte.

5. Verfahren nach einem der vorhergehenden Ansprüche,
**dadurch gekennzeichnet,**
**daß** die Elemente, beispielsweise die Meßaufgabe, Schnittstellen, Protokolle, die zur Konfiguration der Meßaufgabe durch den Benutzer in Frage kommen, auf der Anzeigevorrichtung optisch anders dargestellt werden, insbesondere durch eine andere Farbe, als Elemente, die er noch erwerben kann, oder Elemente, die gegenwärtig nicht angeboten werden, oder Elemente, die er online erwerben kann.

6. Verfahren nach einem der vorhergehenden Ansprüche,
**dadurch gekennzeichnet,**
**daß** bei der Konfiguration der Meßaufgabe mindestens ein Protokoll angegeben werden kann, das zur Lösung der Meßaufgabe beiträgt, wobei die Konfiguration über graphisches Auswählen, insbesondere mittels Checkbox, Combobox, Popup-Menü, erfolgt.

7. Verfahren nach Anspruch 6,
**dadurch gekennzeichnet,**
**daß** unterschiedliche Versionen des mindestens einen Protokolls über graphisches Auswählen, insbesondere mittels Checkbox, Combobox, Popup-Menü, selektiert werden können.

8. Verfahren nach einem der vorhergehenden Ansprüche,
**dadurch gekennzeichnet,**
**daß** sich nach Konfiguration der Meßaufgabe durch den Benutzer der Protokolltester hardwaremäßig im Hinblick auf die konfigurierte Meßaufgabe konfiguriert.

9. Verfahren nach einem der vorhergehenden Ansprüche,
**dadurch gekennzeichnet,**
**daß** die Standardwerte herstellerseitig ermittelt und im Protokolltester vorgegeben werden.

10. Verfahren nach einem der vorhergehenden Ansprüche,
**dadurch gekennzeichnet,**
**daß** dem Benutzer bei der Auswahl der Meßaufgabe auch bereits in der Vergangenheit konfigurierte Meßaufgaben auf der Anzeigevorrichtung zur Auswahl und/oder zur Modifikation angeboten werden.

11. Protokolltester, der zur Konfiguration einer Messaufgabe Folgendes umfasst:
a) Mittel zum Anzeigen eines visuellen Netzplans (10), wobei der visuelle Netzplan (10) mehrere Netzwerktopologieelemente (12, 20, 22, 24, 26, 28, 30, 32) als Ebene eines Telekommunikationsnetzwerks darstellt,
b) Mittel zum graphischen Aktivieren mindestens eines der dargestellten Netzwerkelementen, (12) durch einen Benutzer;
c) Mittel zum Anzeigen verschiedener Messaufgaben (16), die mit Bezug auf das mindestens eine aktivierte Netzwerkelement möglich sind;
d) eine Speichervorrichtung, in der zumindest Standardwerte für Parameter abgelegt sind, die zur Konfiguration der Meßaufgabe dienen können;
e) Mittel zum graphischen Auswählen einer der Meßaufgaben (16) durch den Benutzer, wobei diese Mittel zur weiteren Konfiguration der Meßaufgabe durch den Benutzer derart ausgelegt sind, daß dieser ausgehend von der Ebene des aktievierte Netzwerkelements, Ebene für Ebene in darunter liegenden Ebenen weitere, den Meßaufgabe zur konfiguration dienende Parameter eingeben kann, wobei die nicht vom Benutzer spezifizierten Parameter mit den dazugehörigen Standardwerten belegt werden.

## Claims

1. A method for the configuration of a measurement task on a protocol tester, comprising the following steps:
a) Displaying of a visual network plan (10) on a display device, with the visual network plan (10) representing several network topology elements (12, 20, 22, 24, 26, 28, 30, 32) as level of a telecommunication network;
b) graphical activating of at least one of the represented network elements (12) by a user;
c) displaying of different measurement tasks (16) on the display device which are possible with respect to the at least one activated network element;
d) graphical selecting of one of the measurement tasks (16) by the user, with the user being able, for the further configuration of the measurement task, proceeding from the level of the activated network element, to enter further parameters serving for the measurement task for configuration level by level in lower levels, with the parameters not specified by the user being occupied by standard values.

2. Method according to claim 1,
**characterised in that**
the measurement tasks, from which the user can select, comprise the following: monitoring (16), call tracing, simulation, emulation, statistical evaluation of signalling flows, recording, conformance test, regression test, load test and error tolerance test.

3. Method according to claim 2,
**characterised in that,**
when selecting monitoring (16) as a measurement task, the user can specify on the next level on which interfaces (20, 24, 28, 30, 32) he wishes to monitor.

4. Method according to claim 3,
**characterised in that**
the user can specify on the next level which protocols he wishes to monitor.

5. Method according to one of the preceding claims,
**characterised in that**
the elements, for example the measurement task, the interfaces, the protocols, which are eligible for the configuration of the measurement task by the user, are displayed in a visually different way on the display device, particularly through another colour, than elements he can still purchase or elements which are presently not offered or elements he can purchase online.

6. Method according to one of the preceding claims,
**characterised in that**
in the configuration of the measurement task at least one protocol can be specified that contributes to the solving of the measurement task, with the configuration being made via graphic selection, particularly by way of the check box, the combobox and the pop-up menu.

7. Method according to claim 6,
**characterised in that**
different versions of the at least one protocol can be selected via graphic selection, particularly by way of check box, combobox, pop-up menu.

8. Method according to one of the preceding claims,
**characterised in that**
after the configuration of the measurement task by the user, the protocol tester configures itself hardware-wise with respect to the configured measurement task.

9. Method according to one of the preceding claims,
**characterized in that**
the standard values are determined by the manufacturer and predetermined in the protocol tester.

10. Method according to one of the preceding claims,
**characterized in that**
during the selection of the measurement task, measurement tasks already configured in the past are also offered to the user on the display device for selection and/or modification.

11. A protocol tester comprising the following for the configuration of a measurement task:
a) Means for displaying a visual network plan (10), said visual network plan (10) representing several network topology elements (12, 20, 22, 24, 26, 28, 30, 32) as level of a telecommunication network;
b) means for graphical activation of at least one of the represented network elements (12) by a user;
c) means for displaying various measurement tasks (16), which are possible with reference to the at least one activated network element;
d) a storage device in which at least standard values for parameters are stored, which may serve for the configuration of the measurement task;
e) means for graphical selection of one of the measurement tasks (16) by the user, said means being designed for the further configuration of the measurement task by the user such that said user, proceeding from the level of the activated network element, can enter further parameters serving for the measurement task for configuration level by level in lower levels, with the parameters not specified by the user being occupied by standard values.

## Revendications

1. Procédé pour la configuration d'une tâche de mesure sur un testeur de protocoles comprenant les étapes suivantes :
a. affichage d'un plan de réseau visuel (10) sur un dispositif d'affichage, le plan de réseau visuel (10) représentant plusieurs éléments topologiques du réseau (12, 20, 22, 24, 26, 28, 30, 32) en tant que niveau d'un réseau de télécommunications ;
b. activation graphique d'au moins l'un des éléments de réseau (12) représentés par un utilisateur ;
c. affichage de différentes tâches de mesure (16) qui sont possibles en ce qui concerne au moins un des éléments de réseau activés sur le dispositif d'affichage ;
d. sélection graphique d'une des tâches de mesure (16) par l'utilisateur, l'utilisateur pouvant, à partir du niveau de l'élément de réseau activé, saisir dans les différents niveaux sous-jacents, des paramètres supplémentaires pour la configuration ultérieure de la tâche de mesure et des valeurs par défaut étant affectées aux paramètres non spécifiés par l'utilisateur.

2. Procédé selon la revendication 1,
**caractérisé par le fait que**
les tâches de mesure parmi lesquelles l'utilisateur peut choisir comprennent les tâches suivantes : surveillance (16), call tracing, simulation, émulation, évaluation statistique des flux de signalisation, enregistrement, test de conformité, test de régression, test de performance et test de tolérance aux erreurs.

3. Procédé selon la revendication 2,
**caractérisé par le fait que**
l'utilisateur puisse spécifier, lors de la sélection de la surveillance (16) en tant que tâche de mesure au niveau suivant, les interfaces (20, 24, 28, 30, 32) qu'il souhaite surveiller.

4. Procédé selon la revendication 3,
**caractérisé par le fait que**
l'utilisateur puisse spécifier au niveau suivant les protocoles qu'il souhaite surveiller.

5. Procédé selon l'une des revendications précédentes,
**caractérisé par le fait que**
les éléments tels que la tâche de mesure, les interfaces, les protocoles etc. qui sont mis en cause concernant la configuration de la tâche de mesure par l'utilisateur, sont représentés différemment sur le dispositif d'affichage, et ce notamment par une couleur différente en tant qu'éléments qu'il peut encore acquérir ou comme éléments qui ne sont pas actuellement offerts, ou comme éléments qu'il peut acquérir en ligne.

6. Procédé selon l'une des revendications précédentes,
**caractérisé par le fait que**,
lors de la configuration de la tâche de mesure, on peut indiquer au moins un protocole qui contribue à la solution de la tâche de mesure, la configuration étant assurée par sélection graphique, et ce notamment au moyen de cases à cocher, de zones combinées et de boîtes de dialogue.

7. Procédé selon la revendication 6,
**caractérisé par le fait que**
différentes versions d'au moins un des protocoles peuvent être choisis par sélection graphique, et ce notamment au moyen de cases à cocher, de zones combinées et de boîtes de dialogue.

8. Procédé selon l'une des revendications précédentes,
**caractérisé par le fait que**
le testeur de protocoles, après la configuration de la tâche de mesure par l'utilisateur, se configure, quant au matériel, en vue de la tâche de mesure configurée.

9. Procédé selon l'une des revendications précédentes,
**caractérisé par le fait que**
les valeurs par défaut sont évaluées par le fabricant et déterminées dans le testeur de protocoles.

10. Procédé selon l'une des revendications précédentes,
**caractérisé par le fait que**,
lors de la sélection de la tâche de mesure, des tâches de mesure déjà configurées dans le passé sont proposées sur le dispositif d'affichage pour être sélectionnées et/ou modifiées.

11. Testeur de protocoles comprenant les éléments suivants pour la configuration d'une tâche de mesure :
a. un dispositif pour l'affichage d'un plan de réseau visuel (10), le plan de réseau visuel (10) représentant plusieurs éléments topologiques du réseau (12, 20, 22, 24, 26, 28, 30, 32) en tant que niveau d'un réseau de télécommunications ;
b. un dispositif pour l'activation graphique d'au moins l'un des éléments de réseau (12) représentés par l'utilisateur ;
c. un dispositif pour l'affichage de différentes tâches de mesure (16) qui sont possibles en ce qui concerne au moins un élément de réseau activé ;
d. un dispositif d'enregistrement dans lequel au moins des valeurs par défaut sont sauvegardées pour les paramètres qui peuvent servir à la configuration de la tâche de mesure ;
e. un dispositif pour la sélection graphique de l'une des tâches de mesure (16) par l'utilisateur, ce dispositif pour la configuration ultérieure de la tâche de mesure par l'utilisateur étant conçu de manière à ce qu'à partir du niveau de l'élément de réseau activé, ce dernier puisse saisir, dans les différents niveaux sous-jacents, des paramètres supplémentaires pour la configuration ultérieure de la tâche de mesure et des valeurs par défaut étant affectées aux paramètres non spécifiés par l'utilisateur.
